(19) Europäisches Patentamt
European Patent Office
Office européen des brevets

(11) Veröffentlichungsnummer: 0 001 624
B1

(12) # EUROPÄISCHE PATENTSCHRIFT

(45) Veröffentlichungstag der Patentschrift: 15.07.81

(51) Int. Cl.³: C 08 L 51/04, C 08 L 25/12

(21) Anmeldenummer: 78101145.7

(22) Anmeldetag: 14.10.78

(54) **Thermoplastische Formmassen.**

(30) Priorität: 26.10.77 DE 2747823

(43) Veröffentlichungstag der Anmeldung:
02.05.79 Patentblatt 79/9

(45) Bekanntmachung des Hinweises auf die Patenterteilung
15.07.81 Patentblatt 81/28

(84) Benannte Vertragsstaaten:
BE DE FR GB NL

(56) Entgegenhaltungen:
keine

(73) Patentinhaber: BAYER AG
Zentralbereich Patente, Marken und Lizenzen
D-5090 Leverkusen 1, Bayerwerk (DE)

(72) Erfinder: Liebig, Lothar, Dr.
Walter-Flex-Strasse 19
D-5090 Leverkusen 1 (DE)
Erfinder: Wingler, Frank, Dr.
Walter-Flex-Strasse 17
D-5090 Leverkusen 1 (DE)
Erfinder: Ott, Karl-Heinz, Dr.
Paul-Klee-Strasse 54
D-5090 Leverkusen 1 (DE)
Erfinder: Humme, Gert, Dr.
Ackerstrasse 17
D-5068 Odenthal (DE)
Erfinder: Pischtschan, Alfred, Dr.
Zur Eiche 33
D-5067 Kürten (DE)

EP 0 001 624 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Thermoplastische Formmassen

Schlagfeste thermoplastische Formmassen kann man herstellen, indem man beispielsweise Styrol (S) und Acrylnitril (A) in Gegenwart von Polybutadien (B) polymerisiert ("ABS-Polymerisate"). Durch Verwendung eines amorphen Polyolefins anstatt Polybutadien wird die Witterungsbeständigkeit erheblich verbessert, wenn das Polyolefin keine C=C-Bindungen in der Hauptkette enthält. Man verwendet z.B. EPDM-Kautschuke aus Äthylen (E), Propylen (P) und einem nichtkonjugierten Dien (D) und erhält "AES-Polymerisate", d.h. Thermoplaste, in denen Acrylnitril (A) und Styrol (S) auf einen EPDM-Kautschuk (E) pfropfpolymerisiert sind.

AES- und ABS-Kunststoffe bestehen i.a. aus zwei Phasen. Die kontinuierliche Phase ist ein Copolymerisat aus den aufgepfropften Monomeren, meist ein Styrol-Acrylnitril-Copolymerisat ("SAN-Thermoplast"); die eingelagerte diskontinuierliche Phase ist das eigentliche Pfropfpolymerisat. Durch seine aufpolymerisierten Seitenketten ("SAN-Hülle") ist es mit dem Copolymerisat verträglich.

So werden in der DT—OS 1 949 487 Mischungen von Pfropfpolymerisaten von Styrol und Acrylnitril auf einen Kautschuk mit einer Glastemperatur unter —30°C mit Copolymerisaten aus Styrol, Maleinsäureanhydrid und gegebenenfalls Acrylnitril beschrieben, die gegebenenfalls noch ein Copolymerisat aus Styrol und Acrylnitril (SAN-Harz) enthalten.

Gegenstand der Erfindung sind thermoplastische Formmassen aus

| | | |
|---|---|---|
| A | 25—95 Gew.-% | eines Pfropfpolymerisats von |
| | 70—30 Gew.-% | eines Gemisches von |
| | 95—50 Gew.-% | Styrol und |
| | 5—50 Gew.-% | Acrylnitril auf |
| | 30—70 Gew.-% | EPDM-Kautschuk, und |
| B | 5—75 Gew.-% | eines Terpolymerisats aus Acrylnitril, Maleinsäureanhydrid und Styrol, dadurch gekennzeichnet, daß das Terpolymerisat |
| | 10—30 Gew.-% | Acrylnitril |
| | 7,5—15 Gew.-% | Maleinsäureanhydrid |
| | 82,5—55 Gew.-% | Styrol |
| | | einpolymerisiert enthält, |
| | | wobei sich die Prozentangaben zu 100 ergänzen. |

Die erfindungsgemäß zu verwendenden Pfropfpolymerisate sind bekannt. Sie können erhalten werden durch Polymerisation von Styrol und Acrylnitril in Gegenwart des Kautschuks. Mindestens ein Teil des Styrols und Acrylnitrils ist dann auf den Kautschuk pfropfpolymerisiert. Daneben liegt in der Regel auch nichtgepfropftes Styrol-Acrylnitril-Copolymerisat vor. Die Pfropfcopolymerisate können in bekannter Weise durch radikalische Polymerisation von Styrol und Acrylnitril in Gegenwart des Kautschuks in Substanz, Emulsion, Suspension oder Lösung sowie durch kombinierte Verfahren wie Masse/Suspensionpolymerisation oder Lösungs-/Fällungs-Polymerisation erhalten werden.

Als EPDM-Kautschuk kommen in Frage:

Copolymerisate aus Äthylen, Propylen und einem nicht-konjugierten Dien. Das Gewichtsverhältnis Äthylen:Propylen ist bevorzugt 75:25 bis 40:60. Das Dien ist in solchen Mengen und in solcher Form im Copolymerisat eingebaut, daß Jodzahlen von 2—30 gemessen werden, entsprechend ca. 1—15 C=C-Bindungen pro 1000 C-Atome. Die Monomerbausteine können statistisch oder in Blöcken angeordnet sein.

Das Terpolymerisat aus Acrylnitril, Maleinsäureanhydrid und Styrol muß aufgebaut sein aus 10—30 Gew.-% Acrylnitril-Einheiten, 7,5—15 Gew.-% Maleinsäureanhydrid-Einheiten, 82,5—55 Gew.-% Styrol-Einheiten. Es ist erforderlich, daß das Material eine enge Molekulargewichtsverteilung hat, die sich durch die molekulare Uneinheitlichkeit

$$U = \frac{M_w}{M_n} - 1$$

ausdrücken läßt ($\bar{M}_w$ = Gewichtsmittel des Molekulargewichts, $\bar{M}_n$ = Zahlenmittel des Molekulargewichts). Die molekulare Uneinheitlichkeit soll 0,5—1,5 sein, bevorzugt 0,8—1,2. Weiter ist erforderlich, daß die Terpolymerisate chemisch einheitlich sind. Hiermit ist gemeint, daß die einzelnen Molekulargewichtsfraktionen eines gegebenen Polymerisats das gleiche Mengenverhältnis an Acrylnitril/Maleinsäureanhydrid/Styrol-Bausteinen besitzen müssen.

Terpolymerisate dieses Aufbaues aus Acrylnitril, Maleinsäureanhydrid und Styrol können erhalten werden durch eine kontinuierliche Mischpolymerisation unter stationären Bedingungen. Von stationären Bedingungen spricht man dann, wenn die Konzentration sämtlicher Reaktionsteilnehmer und die Zusammensetzung der gebildeten Polymerisate über die Zeitdauer der Polymerisation konstant sind. Konstante Bedingungen stellen sich in einem kontinuierlich betriebenen und ideal durchmischten Tankreaktor nach etwa 0,5—24 Stunden ab Beginn der Polymerisation ein. Man muß dabei für ideale Durchmischung sorgen, das heißt, die Einmischzeit darf nur höchstens 1/10 der mittleren Verweilzeit im Reaktor sein. Bevorzugt führt man die kontinuierliche Polymerisation in einem Tankreaktor mit Peroxydinitiatoren durch, die bei 100°C eine Zerfallsgeschwindigkeitskonstante K von $\geq 15 \times 10^{-3}$ sek.$^{-1}$ besitzen. Bei Polymerisationstemperaturen von 60—150°C kann man beispielsweise benutzen tert.-Butylperoktoat, Benzoylperoxyd, Laurylperoxyd, tert.-Butylperpivalet, Isopropylperoxydicarbonat, 2-Äthylhexylperoxydicarbonat, und Acetylcyclohexylsulfonylperoxyd. Initiatormengen sind bevorzugt 0,01—0,5 Gew.-%. Bei dieser Polymerisation können Übertragungsmittel oder Kettenabbrecher benutzt werden.

Das Mengenverhältnis der zugeführten Monomeren muß so gewählt werden, daß ein Polymerisat der gewünschten Zusammensetzung entsteht. Die genaue Monomerenzusammensetzung für ein gewünschtes Polymerisat muß durch Vorversuche ermittelt werden. Beispielsweise ergibt die kontinuierliche Polymerisation eines Gemisches aus 74 Gew.-% Styrol, 22 Gew.-% Acrylnitril und 4 Gew.-% Maleinsäureanhydrid bei einem stationären Umsatz von 35% ein erfindungsgemäß besonders geeignetes Terpolymerisat.

Die kontinuierliche Polymerisation unter stationären Bedingungen wird im allgemeinen ohne zusätzliche Lösungsmittel durchgeführt. Sie wird bei einem Umsatz von 30—40 Gew.-% abgebrochen, die entstandene Lösung des Terpolymerisats im Monomerengemisch wird dann durch Eindampfen und Rückführung der zurückgewonnenen Monomeren in den Prozess aufgearbeitet. Zum Eindampfen der Lösung verwendet man die üblichen Methoden, beispielsweise Entspannungsverdampfung, Schneckeneindampfung, Dünnschichtverdampfung oder Fallfilmverdampfung sowie Sprühtrocknung.

Für die erfindungsgemäßen Formmassen sind besonders Terpolymerisate geeignet, deren Acrylnitrilgehalt im Bereich des Acrylnitrilgehalts der Pfropfpolymerisate liegen.

Die erfindungsgemäßen Formmassen zeigen im Vergleich zu Formmassen aus denselben Pfropfpolymerisaten und SAN-Copolymerisaten eine gute Fließfähigkeit und ein unvermindert gutes Zähigkeitsniveau bei um mindestens 12°C erhöhter Wärmestandfestigkeit.

Die erfindungsgemäßen Formmassen sind insbesondere dort von Vorteil, wo es auf gute Wetterbeständigkeit, hohe Wärmeformbeständigkeit, hohe Zähigkeit und leichte Verarbeitbarkeit ankommt. So können sie beispielsweise mit Vorteil zur Herstellung von Rohrleitungen, von hochwertigen Dichtungen, von Geschirr, von heißdampfsterilisierbaren Geräten, von Waschmaschinenteilen, von Batteriekästen, von Trockenbatteriegehäusen, von Gehäusen und anderen isolierenden Teilen in elektrisch betriebenen Maschinen, von Elektroisolierfolien, von verseifungsstabilen Behälterauskleidungen, chemisch und thermisch widerstandsfähigen Filtertüchern und vielen anderen Dingen verwendet werden.

## BEISPIELE

(A) *Pfropfpolymerisat auf Basis von EPDM-Kautschuk*

In 300 Teilen Benzol werden 48 Tle EPDM-Kautschuk auf Basis von Dicyclopentadien (Jodzahl 11, Mooney 70) gelöst. Es werden 37,5 Teile Styrol und 14,5 Teile Acrylnitril zugegeben und die Lösung auf 120°C erwärmt. Nach Zusatz von 0,9 Teilen Di-tert.-butylperoxid wird 12 Stunden polymerisiert. Der Polymer-lösung werden dann 0,5 Teile 2,6-Di-tert.-butyl-p-kresol zugesetzt und das Polymerisat durch Strippen isoliert. Das Polymerprodukt wird bei 70°C im Vakuumtrockenschrank getrocknet.

(B) *Herstellung des Terpolymerisates aus Styrol, Acrylnitril und Maleinsäureanhydrid* ("SAMA-Copolymer")

In ein ummanteltes Reaktionsgemäß, das versehen ist mit Blattrührer, Temperaturfühler, Einlaß- und Auslaßstutzen, werden 2000 Teile einer Mischung aus 7260 Teilen Styrol, 2200 Teilen Acrylnitril, 440 Teilen Maleinsäureanhydrid und 25 Teilen tert.-Dodecylmercaptan gefüllt. Dann wird der Reaktorinhalt auf 95°C erwärmt und bei dieser Temperatur die Polymerisation gestartet, wobei man die Mischung mit einem Durchsatz von 2000 Teilen pro Stunde dem Reaktor zuführt und gleichzeitig dieselbe menge abführt. Der Initiator wird ebenfalls kontinuierlich dem Reaktor zugegeben: 0,6 Teile tert.-Butylperpivalat (75%ig in Dibutylphthalat) pro Stunde, so daß nach ca. 2 Stunden eine Polymerlösung mit ca. 30% Feststoff entsteht. Die entnommene Lösung des Polymeren in den Monomeren wird mit 0,1 Gew.-% 2.6-Di-tert.-butyl-p-kresol versetzt und anschließend auf einem Ausdampfextruder von den Monomeren und den flüchtigen Bestandteilen befreit.

Das SAMA-Copolymer enthält 17 Gew.-% Acrylnitril, 12 Gew.-% Maleinsäureanhydrid und 71 Gew.-% Styrol.

Die Grenzviskositätszahl beträgt $[\eta] = 0,7$ dl/g.

Die Monomeren-Verteilung in Fraktionen unterschiedlichen Molekulargewichts zeigt die folgende Tabelle:

| Fraktion Nr. | Gew.-% | $(\eta)$ | Gew.-% AN | Gew.-% MSA | Gew.-% Styrol |
|---|---|---|---|---|---|
| 1 | 4,21 | 1,28 | 18,0 | 12,3 | 69,7 |
| 2 | 7,25 | 1,09 | 18,6 | 12,7 | 68,7 |
| 3 | 19,16 | 0,96 | 17,2 | 12,9 | 69,9 |
| 4 | 9,73 | 0,86 | 18,6 | 11,9 | 69,5 |
| 5 | 11,14 | 0,77 | 18,4 | 12 | 69,6 |
| 6 | 11,52 | 0,64 | 18,0 | 11,5 | 70,5 |
| 7 | 11,91 | 0,52 | 16,5 | 12,0 | 71,5 |
| 8 | 26,75 | 0,50 | 13,5 | 12,1 | 74,4 |

Die Fraktionierung erfolgte aus Dimethylformamid mit Cyclohexan bei 78°C.

(C) *Herstellung der Mischung*

Die Kompenenten werden in einem Innenkneter gemischt, als Stränge abgesponnen, granuliert und zu Prüfkörpern verspritzt. In Tabelle 1 sind die Mischungen des Pfropfpolymerisat (A) mit Copolymerisaten verschiedener Zusammensetzungen, die analog (B) hergestellt wurden, aufgeführt. Im Vergleichsversuch 6 wird ein handelsübliches SAN-Copolymerisat aus 75 Gew.-% Styrol und 25% Acrylnitril mit einer Grenzviskositätszahl von 0,70 dl/g verwendet.

VERGLEICHBEISPIEL

*Pfropfpolymerisat auf Basis von Polybutadien (gem. EP—A Nr. 000 1625)*

Die Herstellung des ABS-Pfropfpolymerisats geschieht durch Polymerisation von 37 Teilen Styrol und 13 Teilen Acrylnitril auf 50 Teile eines Polybutadiens (gems. den Angaben der DE—AS 12 47 665 und DE—AS 12 69 360 über eine Emulsionspolymerisation), wobei der mittlere Teilchendurchmesser der in Latexform vorliegenden Polybutadienpfropfgrundlage zwischen 0,2 und 0,4 $\mu$m liegt.

Es wurde folgender Versuch durchgeführt:

Ein Gemisch aus 40 Gew.-Teile des unter (A) auf Seite 5 beschriebenen Pfropfpolymerisats und aus 60 Gew.-Teile des unter (B) auf Seite 5 beschriebenen Terpolymerisats wurden nach der Vorschrift (C) auf Seite 6 gemischt, aus dieser Mischung wurden auf einer Spritzgußmaschine spiralförmige Probekörper gegossen, und dabei die Fließlänge des Materials in cm als Funktion der Temperatur bestimmt. Die Fließlänge war 32 cm bei 220°C, 40 cm bei 240°C, 48 cm bei 260°C, und 56 cm bei 280°C. Zum Vergleich wurde ein Gemisch hergestellt aus 40 Teilen des Pfropfpolymerisats auf Basis von Polybutadien gemäß (A) auf Seite 7 der EP—A Nr. 000 1625 und 60 Gew.-Teilen des oben erwähnten Produktes (B). Der Fließtest ergab 30 cm bei 220°C, 30 cm bei 240°C, 22 cm bei 260°C, und 18 cm bei 280°C. Die Fließfähigkeit des Produktes bei dem inrede stehenden Test ist ein Maß einerseits für die Größe und Komplexität herstellbarer Formkörper, andererseits für die Geschwindigkeit, mit der sich Spritzgußteile herstellen lassen. Während also bei dem Produkt auf Polybutadienbasis durch Erhöhung der Temperatur über 220°C hinaus die Ergebnisse verschlechtert werden, lassen sie sich bei dem Produkt auf EPDM-Basis noch erheblich verbessern. Unseres Wissens ist diese Wirkung nur bei der Kombination des EPDM-Pfropfs mit dem inrede stehenden Terpolymerisat zu beobachten.

Die von une beanspruchten Formmassen zeigen im Vergleich zu Formmassen, die Polybutadien als Kautschukbasis enthalten, eine Eigenschaft, die für den Fachmann unerwartet war. Bei den Produkten gemäß der vorliegenden Anmeldung wird die Verarbeitbarkeit mit steigender Temperatur besser, währen bei den Produkten auf Polybutadienbasis die Verarbeitbarkeit schlechter wird.

TABELLE 1

| Beispiel | Komponent-Verhältnis | | Zusammensetzung | | | | a n | | a k | | | Vicat | MFI |
|---|---|---|---|---|---|---|---|---|---|---|---|---|---|
| | Komp. A | Komp. B | Komp. B | S | A | MSA | 20 °C | -40 °C | 20 °C | 0 °C | -40 °C | 0 °C | 220 °C/10 N |
| | | | a | 78 | 10 | 12 | 20 | – | 2 | – | – | 118 | 10,5 |
| | | | b | 75,5 | 17 | 7,5 | – | – | – | – | – | 112 | 35 |
| | | | c | 72 | 17 | 11 | 10 | 22 | 2,1 | 1,6 | 1,7 | 117 | 11,4 |
| | | | d | 69 | 17 | 14 | 20 | 18 | 2 | 1,5 | 1,6 | 120 | 7,2 |
| | | | e | 64 | 24 | 12 | 24 | – | 2 | – | – | 120 | 12 |
| | | | f | 75 | 25 | – | – | – | – | – | – | 99 | 22 |
| 1 | 40 | 60 | a | | | | 69 | 77 | 7,1 | 5,3 | 1,5 | 104 | 7,0 |
| 2 | 40 | 60 | b | | | | ng | 69 | 9,5 | 7,2 | 2,0 | 100 | 9,5 |
| 3 | 40 | 60 | c | | | | ng | $(106)_5$ | 12,7 | 8,6 | 2,8 | 103 | 7,8 |
| 4 | 40 | 60 | d | | | | $(81)_1$ | $(83)_6$ | 13,1 | 8,6 | 2,9 | 105 | 7,9 |
| 5 | 40 | 60 | e | | | | $(73)_3$ | 81 | 10,4 | 8,2 | 2,0 | 104 | 7,5 |
| 6 | 40 | 60 | f | | | | $(60)_1$ | 78 | 12,6 | 8,1 | 4,1 | 89 | 12,7 |

Komp. A = Pfropfpolymerisat von Styrol und Acrylnitril auf EPDM–Kautschuk gem. A

Komp. B = Copolymerisat von Styrol, Acrylnitril und Maleinsäureanhydrid gem B

S = Styrol

A = Acrylnitril

MSA = Maleinsäureanhydrid

a n = Schlagzähigkeit nach DIN 53 453. Es wurden jeweils 10 Norm-Kleinstäbe geprüft. Wenn nicht alle Stäbe bei einer gegebenen Schlagbeanspruchung gebrochen sind, ist die Schlagbeanspruchung in Klammern gesetzt und die Anzahl der gebrochenen Stäbe dahinter angegeben

ng = nicht gebrochen

a k = Kerbschlagzähigkeit nach DIN 53 453

Vicat = Wärmeformbeständigkeit nach Vicat B in °C

MFI = Melt Flow Index nach DIN 53 755

**Patentanspruch**

Thermoplastische Formassen aus

| | | |
|---|---|---|
| A | 25—95 Gew.-% | eines Pfropfpolymerisates von |
| | 70—30 Gew.-% | eines Gemisches von |
| | 95—50 Gew.-% | Styrol und |
| | 5—50 Gew.-% | Acrylnitrile auf |
| | 30—70 Gew.-% | EPDM-Kautschuk, und |
| B | 5—75 Gew.-% | eines Terpolymerisates aus Acrylnitril, Maleinsäureanhydrid und Styrol, dadurch gekennzeichnet, daß das Terpolymerisat |
| | 10—30 Gew.-% | Acrylnitril |
| | 7,5—15 Gew.-% | Maleinsäureanhydrid |
| | 82,5—55 Gew.-% | Styrol |
| | | einpolymerisiert enthält, |
| | | wobei sich die Prozentangaben zu 100 ergänzen. |

**Claim**

Thermoplastic moulding compositions comprising

| | | |
|---|---|---|
| A | 25 to 95% | by weight of a graft polymer of |
| | 70 to 30% | by weight of a mixture of |
| | 95 to 50% | by weight of styrene and |
| | 5 to 50% | by weight of acrylontrile on |
| | 30 to 70% | by weight of an EPDM-rubber, and |
| B | 5 to 75% | by weight of a terpolymer of acrylontrile, maleic acid anhydride and styrene, characterised in that the terpolymer contains |
| | 10 to 30% | by weight of acrylontrile, |
| | 7.5 to 15% | by weight of maleic acid anhydride and |
| | 82.5 to 55% | by weight of styrene in copolymerised form, |
| | | the indicated percentages adding up to 100. |

**Revendication**

Matières à mouler thermoplastiques consistant en:

| | | |
|---|---|---|
| A | 25 à 95% | en poids d'un polymère greffé de |
| | 70 à 30% | en poids d'un mélange de |
| | 95 à 50% | en poids de styrène et |
| | 5 à 50% | en poids d'acrylonitrile sur |

| | | |
|---|---|---|
| | 30 à 70% | en poids de caoutchouc EPDM, et |
| B | 5 à 75% | en poids d'un copolymère ternaire de l'acrylontrile, de l'anhydride maléique et du styrène, caractérisées en ce que le copolymère ternaire contient, à l'état polymérisé, |
| | 10 à 30% | en poids d'acrylontrile, |
| | 7,5 à 15% | en poids d'anhydride maléique, |
| | 82,5 à 55% | en poids de styrène, |

les indications de pourcentages se rapportant à un total de 100.